# EUROPÄISCHE PATENTANMELDUNG

(11) **EP 2 712 178 A2**
(43) Veröffentlichungstag der Anmeldung: **26.03.2014**
(21) Anmeldenummer: 13176251.0
(22) Anmeldetag: 12.07.2013
(51) Int. Cl.: H04N 5/32

(54) **Dentaltechnikbilderfassungsvorrichtung**

(30) Priorität: 30.08.2012 DE 102012108039
(71) Anmelder: Renfert GmbH, 78247 Hilzingen (DE)
(72) Erfinder: Burgbacher, Tilo, 78465 Konstanz (DE)
(74) Vertreter: Daub, Thomas

(57) **Zusammenfassung**

Die Erfindung betrifft eine Dentaltechnikbilderfassungsvorrichtung (12) mit einer Kameraeinheit (20) zur Aufnahme stereoskopischer Bilder, die zumindest zwei Kameramodule (22, 24) aufweist, und mit zumindest einer Steuereinheit (14), die Signale der Kameraeinheit (20) verarbeitet und zumindest ein Ausgabesignal liefert, das dazu vorgesehen ist, einer Anzeigeeinheit (30) zugeführt zu werden.

## Beschreibung

### Stand der Technik

Die Erfindung betrifft eine Dentaltechnikbilderfassungsvorrichtung nach Anspruch 1.

Es sind Mikroskopieanordnungen bekannt, die einem Dentaltechniker mittels rein optischer Hilfsmittel eine vergrößerte Beobachtung eines Werkstücks ermöglichen.

Die Aufgabe der Erfindung besteht insbesondere darin, eine gattungsgemäße Vorrichtung mit guten ergonomischen Eigenschaften bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung betrifft eine Dentaltechnikbilderfassungsvorrichtung mit einer Kameraeinheit zur Aufnahme stereoskopischer Bilder, die zumindest zwei Kameramodule aufweist, und mit zumindest einer Steuereinheit, die Signale der Kameraeinheit verarbeitet und zumindest ein Ausgabesignal liefert, das dazu vorgesehen ist, einer Anzeigeeinheit zugeführt zu werden. Unter einer "Dentaltechnikbilderfassungsvorrichtung" soll insbesondere eine Vorrichtung verstanden werden, die dazu vorgesehen ist, von Dentaltechnikern und/oder Ärzten, insbesondere Zahnärzten, bei der Bearbeitung, insbesondere Ausformung, Modellierung, spanenden Bearbeitung, Bemalung und/oder Einfärbung, von zumindest einem zu bearbeitenden Werkstück, also Zahnersatz und/oder Zahnersatzvorstufen, insbesondere Gebissen, Brücken, Passungen, und/oder Zähnen, eingesetzt zu werden, um ein Bild des zu bearbeitenden Werkstücks aufzunehmen und hohe Genauigkeiten bei Randschlüssen und/oder Präparationsgrenzen zu erreichen. Insbesondere ist es denkbar, dass ein von einer Dentaltechnikbilderfassungsvorrichtung erzeugtes Ausgangssignal das von/bzw. bei einem Dentaltechniker aufgenommen wurde, insbesondere über ein Netzwerk, vorteilhaft das Internet, an eine Anzeigeeinheit eines Zahnarztes übermittelt wird bzw. umgekehrt. Unter einem "Kameramodul" soll insbesondere ein Modul verstanden werden, das zumindest einen, vorzugsweise elektrischen, optischen Flächensensor, insbesondere einen CCD-Sensor, und zumindest eine Optikeinheit aufweist, die dazu vorgesehen ist, zumindest einen Objektbereich auf dem CCD-Sensor abzubilden. Alternativ sind Ausgestaltungen der Kameramodule als Zeilensensor denkbar, wobei durch eine Bewegung des zu beobachtenden Objekts oder durch eine Bewegung, insbesondere eine Schwenkbewegung der Kameramodule, ein höherdimensionales Bild generierbar ist. Insbesondere sind die Kameramodule als Web-Cam-Module ausgebildet, wodurch eine preiswerte Ausgestaltung erreicht werden kann. Vorzugsweise sind die Kameramodule jeweils dazu vorgesehen, zumindest ein Signal zu erzeugen, das Bildinformationen unkomprimiert und/oder verlustfrei komprimiert. Alternativ ist es denkbar, dass die Kameramodule ein Signal erzeugen, dass die Bilddaten zumindest teilweise, insbesondere zumindest in einem Randbereich, vorteilhaft lediglich in einem Randbereich, verlustbehaftet komprimiert, um eine Datenrate zu verringern. Insbesondere sind die Kameramodule nebeneinander angeordnet, wobei optische Achsen der Kameramodule vorzugsweise ein gleichschenkliges Dreieck bilden und insbesondere einen Winkel von maximal 30°, insbesondere maximal 20°, vorteilhaft maximal 15°, und insbesondere von zumindest 5°, vorteilhaft von zumindest 10° einschließen. Alternativ sind Ausgestaltungen denkbar, wobei optische Achsen der Kameramodule im Wesentlichen senkrecht zueinander angeordnet sind und über zumindest eine Prisma- und/oder Spiegelanordnung, insbesondere zumindest einem halbdurchlässigen Spiegel, umgelenkt sind. Unter einer "Steuereinheit" soll insbesondere eine Einheit verstanden werden, die zumindest eine Recheneinheit, zumindest eine Speichereinheit und zumindest ein in der Speichereinheit hinterlegtes Betriebsprogramm aufweist, das dazu vorgesehen ist, von der Steuereinheit ausgeführt zu werden. Insbesondere ist die Steuereinheit dazu vorgesehen, die Signale der Kameraeinheit, die vorzugsweise direkten Signalen der Kameramodule entsprechen, zu verarbeiten und zu einem Ausgabesignal zusammenzufügen, das dazu geeignet ist, von zumindest einer stereoskopischen Anzeigeeinheit, insbesondere von beliebigen stereoskopischen Anzeigeeinheiten, als stereoskopisches Bild ausgegeben zu werden. Insbesondere ist die Steuereinheit dazu vorgesehen, die Kameraeinheit, bzw. die Kameramodule mit einem Synchronisierungssignal, insbesondere einem V-Sync-Signal, anzusprechen, um von beiden Kameramodulen gleichzeitig Bilddaten abzufragen. Alternativ ist es denkbar, dass die Steuereinheit dazu vorgesehen ist, Bilddaten der Kameramodule abwechselnd abzufragen, um für Shutterbrillen optimierte Bilddaten zu erhalten. Unter "vorgesehen" soll insbesondere speziell programmiert, ausgelegt und/oder ausgestattet verstanden werden. Darunter, dass "das Ausgabesignal dazu vorgesehen ist, einer Anzeigeeinheit zugeführt" zu werden soll insbesondere verstanden werden, dass die Dentaltechnikbilderfassungsvorrichtung zumindest eine Schnittstelle, insbesondere eine Grafikschnittstelle, beispielsweise eine HDMI-Schnittstelle, VGA-Schnittstelle, oder vergleichbares, alternativ eine drahtlose und/oder drahtgebundene Datenschnittstelle, insbesondere eine Netzwerkschnittstelle, eine USB-Schnittstelle, oder Vergleichbares, aufweist, die dazu vorgesehen ist, mit der Anzeigeeinheit verbunden zu werden. Insbesondere weist die Dentaltechnikvorrichtung zumindest eine Halteeinheit auf, die dazu vorgesehen ist, einen Tablet-PC und/oder ein Smartphone aufzunehmen, der bzw. das dazu vorgesehen ist, das Ausgabesignal zu empfangen und in eine stereoskopische Anzeige zu wandeln. Insbesondere ist die Steuereinheit dazu vorgesehen, insbesondere zumindest abhängig von einer Bedienereingabe, einen Teilausschnitt eines beobachteten Objektbereichs, vorzugsweise digital, insbesondere um einen Faktor zwischen 1 und 32, vergrößert in das Ausganssignal einzubetten. Insbesondere ist die Steuereinheit dazu vorgesehen, ein Ausgangssignal mit geteilter Bildansicht zu berechnen, wobei in einem ersten Teilbereich ein Originalbildausschnitt dargestellt ist und in einem zweiten Teilbereich ein vergrößerter Teil des Originalbildausschnitts dargestellt ist. Vorteilhaft weist die Dentalbilderfassungsvorrichtung zumindest ein Stativ, mit insbesondere zumindest einem Schwenkarm auf, wobei das Stativ an einem oberen Ende zumindest eine Halteeinheit für die Kameramodule aufweist. Insbesondere weist das Stativ an einem unteren Ende zumindest eine Montageeinheit auf, die dazu vorgesehen ist, das Stativ, vorzugsweise über eine Schraub- und/oder Klemmverbindung, mit einem Arbeitsplatz, insbesondere einer Arbeitsplatte, zu verbinden. Insbesondere weist die Dentaltechnikbilderfassungsvorrichtung zumindest eine Beleuchtungseinheit auf, die dazu vorgesehen ist, zumindest einen Objektbereich auszuleuchten. Vorzugsweise ist die Beleuchtungseinheit von zumindest einer LED, insbesondere zumindest einer Gruppe von LED's, die insbesondere ringartig angeordnet sind, gebildet. Alternativ ist es denkbar, dass die Beleuchtungseinheit dazu vorgesehen ist, ein zu beobachtendes Objekt über zumindest einen halbdurchlässigen Spiegel, der vorteilhaft in zumindest einer der optischen Achsen der Kameramodule liegt, zu beleuchten. Vorteilhaft weist die Dentaltechnikbilderfassungsvorrichtung zumindest eine Eingabeeinheit auf, die dazu vorgesehen ist, einem Bediener eine Auswahl von Funktionen und/oder Betriebsmodi zu ermöglichen. Alternativ oder zusätzlich ist es denkbar, dass die Steuereinheit dazu vorgesehen ist, mit zumindest einem externen Eingabegerät, insbesondere einer in einem angeschlossenen Monitor integrierte Touchoberfläche, einem über eine Datenverbindung gekoppelten Smartphone, einer, beispielsweise über USB angeschlossenen, Maus und/oder Tastatur, gekoppelt zu werden, wobei die Steuereinheit insbesondere eine Bedienoberfläche implementiert und über das Ausgabesignal ausgibt. Insbesondere ist die Steuereinheit dazu vorgesehen, in zumindest einem Betriebsmodus, ein aufgenommenes reales Modell in ein rechnergestütztes Modell zur Verwendung in einem CAD-CAM-Verfahren umzuwandeln. Insbesondere ist es denkbar, dass zumindest die Kameraeinheit in einer Fräsmachine, insbesondere zur Überwachung eines Arbeitsablaufs und/oder eines Arbeitsergebnisses, angeordnet ist. Weiterhin ist es denkbar, dass die Steuereinheit dazu vorgesehen ist, in Abhängigkeit von einer Bedienereingabe zwischen einem stereoskopischen Ausgangssignal und einem klassischen Ausgangssignal umzuschalten. Es kann insbesondere eine hohe Ergonomie erreicht werden, wobei insbesondere eine gebückte Haltung des Dentaltechnikers vermieden werden kann. Insbesondere kann ein hoher Vergrößerungsbereich erreicht werden.

Weiterhin wird vorgeschlagen, dass die Steuereinheit dazu vorgesehen ist, eine Lage der Kameramodule zueinander in Abhängigkeit von einem Abstand der Kameraeinheit zu einem zu beobachtenden Objekt anzupassen, wobei sich optische Achsen der Kameramodule vorzugsweise nahe einem Oberflächenpunkt des zu beobachtenden Objekts, insbesondere weniger als 5 mm, vorteilhaft weniger als 2 mm, besonders vorteilhaft weniger als 1 mm, von dem Oberflächenpunkt entfernt, schneiden. Insbesondere weist die Kameraeinheit zumindest eine Aktoreinheit auf, die dazu vorgesehen ist, Signale der Steuereinheit in Lageveränderungen der Kameramodule, Prismen und/oder Spiegel zueinander umzusetzen, um eine Anpassung eines Schnittpunkts der optischen Achsen zu erreichen. Unter einer "Lage der Kameramodule zueinander" soll insbesondere ein Winkel optischer Achsen der Kameramodule zueinander und/oder ein Abstand der Kameramodule zueinander verstanden werden. Insbesondere weist die Dentaltechnikbilderfassungsvorrichtung zumindest eine Sensoreinheit auf, die dazu vorgesehen ist, den Abstand der Kameraeinheit zu dem zu beobachteten Objekt zu messen bzw. abzuschätzen. Insbesondere weist die Sensoreinheit zumindest einen Sensor auf, der eine eingestellte Stativhöhe ermittelt. Weiterhin ist es denkbar, dass die Sensoreinheit zumindest einen optischen, von den Kameramodulen abweichenden, Sensor aufweist, der dazu vorgesehen ist, eine Distanz zwischen der Kameraeinheit und dem Objekt zu messen. Weiterhin ist es denkbar, dass die Steuereinheit dazu vorgesehen ist, aus von den Kameramodulen aufgenommenen Bildern selbst den Abstand zu bestimmen. Insbesondere ist die Steuereinheit dazu vorgesehen, die Lage regelmäßig, insbesondere mit weniger als 3 Sekunden, insbesondere weniger als 1 Sekunde, vorteilhaft weniger als 0,3 Sekunden, Beabstandung, nachzustellen. Weiterhin ist es denkbar, dass die Kameraeinheit insgesamt schwenkbar ausgestaltet ist, und/oder dass die Steuereinheit in zumindest einem Betriebsmodus dazu vorgesehen ist, einem Objekt bzw. einem Objektausschnitt zu folgen, um insbesondere ein Verwackeln bei handgehaltenen Objekten zu vermeiden. Weiterhin wird vorgeschlagen, dass die Steuereinheit dazu vorgesehen ist, in Abhängigkeit von Bedienereingaben eine Lage, insbesondere sowohl einen Abstand als auch einen Winkel, der Kameramodule zueinander anzupassen, um eine vom Bediener gewünschte Plastizität einzustellen. Es kann insbesondere ein erhöhter Komfort erreicht werden. Es kann insbesondere eine einfache und/oder automatische Fokussierung erreicht werden.

Ferner wird vorgeschlagen, dass die Dentaltechnikbilderfassungsvorrichtung zumindest eine Assistenzeinheit aufweist, die dazu vorgesehen ist, in zumindest einem Betriebsmodus eine über einen bloßen Bildtransfer und eine Bildvergrößerung hinausgehende Assistenzfunktion auszuführen. Insbesondere ist die Steuereinheit zumindest teilweise in die Assistenzeinheit integriert. Unter einer "Assistenzfunktion" soll insbesondere eine arbeitsunterstützende Funktion verstanden werden. Insbesondere ist die Assistenzeinheit dazu vorgesehen, in zumindest einem Betriebsmodus Messungen, insbesondere Streckenmessungen, insbesondere zwischen von einem Bediener über eine Eingabeeinheit vorgegebenen Punkten, vorzunehmen und einem Bediener Messergebnisse und/oder aus den Messergebnissen berechnete Werte in das Ausgangssignal einzubetten. Insbesondere ist die Assistenzfunktion zu einer interaktiven Unterstützung eines Bedieners vorgesehen. Insbesondere ist die Assistenzfunktion dazu vorgesehen, ein korrektes und/oder präzises Arbeiten zu erleichtern. Es kann insbesondere ein hoher Komfort erreicht werden.

Weiterhin wird vorgeschlagen, dass die Assistenzeinheit in zumindest einem Betriebsmodus dazu vorgesehen ist, einen Vergleich eines aufgenommenen Objekts bzw. eines Teils des Objekts mit zumindest einem Muster, einem anderen aufgenommen Objekt und/oder einem anderen Teil des aufgenommen Objekts vorzunehmen. Insbesondere ist das Muster in einer Speichereinheit, insbesondere einer Datenbank, die zumindest mit der Steuereinheit verbunden, bzw. verbindbar, und/oder in diese integriert ist, abgespeichert. Insbesondere ist die Steuereinheit dazu vorgesehen, Muster, die insbesondere über die Kameramodule aufgenommen werden, zu erlernen und abzuspeichern. Insbesondere ist die Assistenzeinheit in zumindest einem Betriebsmodus dazu vorgesehen, ein Bild und/oder ein Modell eines Mundraums eines Patienten, das insbesondere auf Röntgenaufnahmen beruht, mit einem aktuell beobachteten Objekt zu überlagern und diese Überlagerung über das Ausgangssignal auszugeben. Insbesondere ist die Assistenzeinheit in zumindest einem Betriebsmodus dazu vorgesehen, eine aktuelle Farbe, einen Farbverlauf, eine Transparenz, eine Opazität und/oder eine Lumineszenz des Objekts bzw. eines Teils des Objekts mit der des Musters zu vergleichen. Insbesondere ist die Assistenzeinheit in zumindest einem Betriebsmodus dazu vorgesehen, eine Abweichung des Farbtons einem Bediener, insbesondere über eine Einblendung im Ausgangssignal, mitzuteilen. Insbesondere ist die Assistenzeinheit in zumindest einem Betriebsmodus dazu vorgesehen, einen Abnutzungsgrad von verwendetem Werkzeug, vorzugsweise mittels Vergleich mit einer Vorgabe, zu erkennen. Insbesondere ist die Assistenzeinheit dazu vorgesehen, einen Bediener bei Benutzung eines abgenutzten Werkzeugs zu warnen. Insbesondere ist die Assistenzeinheit dazu vorgesehen, automatisch neues Werkzeug, beispielsweise einen Pinsel, beispielsweise mittels einer Internetverbindung und/oder innerhalb eines Firmennetzes, zu bestellen. Insbesondere ist die Steuereinheit dazu vorgesehen, ein verwendetes Werkzeug zu erkennen. Insbesondere ist die Steuereinheit dazu vorgesehen, einem Bediener empfohlene Betriebsparameter, die dem erkannten Werkzeug zugeordnet sind, über das Ausgabesignal anzuzeigen. Insbesondere weist die Steuereinheit zumindest eine Schnittstelle auf, die es erlaubt, Betriebsparameter eines erkannten, elektrisch steuerbaren Werkzeugs, beispielsweise einem Bohrgerät, zu steuern bzw. einzustellen. Insbesondere ist die Assistenzeinheit in zumindest einem Betriebsmodus dazu vorgesehen, eine verwendete Farbe zu erkennen und vorteilhaft Informationen über die verwendete Farbe, insbesondere Trocknungshinweise, Weiterverarbeitungshinweise für nachfolgende Prozessschritte, eine Homogenität eines Lackverlaufs und/oder Ähnliches, in das Ausgangssignal einzubetten. Insbesondere ist die Assistenzeinheit in zumindest einem Betriebsmodus dazu vorgesehen, eine Form eines erkannten Objekts, insbesondere eines erkannten Zahnersatzwerkstücks, mit einer abgespeicherten Sollvorgabe zu vergleichen. Insbesondere ist die Assistenzeinheit dazu vorgesehen, ein Warnsignal, insbesondere zumindest über das Ausgangssignal und/oder vorteilhaft zumindest akustisch, insbesondere als Sprachausgabe, alternativ optisch, insbesondere in das Ausgangssignal, beispielsweise als Farbänderung und/oder Warntext, eingebettet, und/oder taktil auszugeben, wenn eine aktuelle Bearbeitung von der Sollvorgabe abweicht. Insbesondere ist die Assistenzeinheit in zumindest einem Betriebsmodus dazu vorgesehen, ein zuvor bereits bearbeitetes, bekanntes Werkstück wiederzuerkennen und/oder eine Patientenzuordnung durchzuführen. Insbesondere ist die Assistenzeinheit dazu vorgesehen, bei Erkennung eines bekannten Werkstücks, dem Werkstück zuvor zugeordnete Zusatzinformationen, wie insbesondere Farbmuster, Formmuster und/oder Patientendaten, aus einem Speicher abzurufen. Weiterhin wird vorgeschlagen, dass die Steuereinheit dazu vorgesehen ist, in Abhängigkeit von einem erkannten Objekttyp, insbesondere Zahnersatztyp und/oder Werkzeugtyp, automatisch eine zugeordnete Vergrößerungsstufe auszuwählen. Es kann insbesondere ein präzises und/oder komfortables Arbeiten erreicht werden.

Ferner wird vorgeschlagen, dass die Assistenzeinheit zumindest eine Indikationseinheit aufweist, die dazu vorgesehen ist, zumindest einen Objektbereich zu kennzeichnen, der von der Kameraeinheit erfasst wird. Unter einem "Objektbereich" soll insbesondere ein von den Kameramodulen erfasster Bereich verstanden werden. Insbesondere weist die Indikationseinheit zumindest ein Leuchtelement, insbesondere zumindest eine Lichtstrahlquelle, vorteilhaft einen sichtbaren Laser, auf. Insbesondere ist die Indikationseinheit dazu vorgesehen, ein Zentrum und/oder eine Begrenzung des Objektereichs zu kennzeichnen. Weiterhin ist es denkbar, dass die Indikationseinheit zumindest einen beweglichen Laser aufweist, der einen Rahmen um einen aktuellen Objektbereich legt und/oder den aktuellen Objektbereich mit einem Gittermuster versieht. Insbesondere ist die Indikationseinheit dazu vorgesehen eine Beleuchtung auf den Objektbereich zu kollimieren. Weiterhin ist es denkbar, dass die Indikationseinheit zwei sichtbare Laser aufweist, die jeweils entlang optischer Achsen der Kameramodule strahlen, wodurch insbesondere eine, vorzugsweise automatische, Erfassung und/oder Einstellung einer Fokusebene durch Einstellung der Lage der Kameramodule zueinander und eine Erweiterung eines Tiefenschärfebereichs ermöglicht wird. Es kann insbesondere ein erhöhter Komfort erreicht werden. Insbesondere kann eine schnelle Auffindung eines zu beobachtenden Bereichs erreicht werden.

Weiterhin wird vorgeschlagen, dass die Assistenzeinheit in zumindest einem Betriebsmodus dazu vorgesehen ist, Signale der Kameraeinheit auszuwerten und Hilfsprojektionen in das Ausgabesignal einzubetten. Insbesondere ist die Assistenzeinheit in zumindest einem Betriebsmodus dazu vorgesehen, zumindest eine Hilfslinie, insbesondere ein Gitternetz und/oder ein Fadenkreuz, zu berechnen und über das eigentliche Bild projiziert in das Ausgabesignal einzubetten. Insbesondere ist die Assistenzeinheit in zumindest einem Betriebsmodus dazu vorgesehen, Kräfteverhältnisse, wie sie insbesondere bei späterem Gebrauch herrschen werden, und/oder Kippachsen des beobachteten Zahnersatzes zu berechnen und auszugeben. Es kann insbesondere ein hoher Komfort und/oder eine hohe Erzeugnisqualität erreicht werden.

Ferner wird vorgeschlagen, dass die Dentaltechnikbilderfassungsvorrichtung zumindest eine Aktivitätssensoreinheit aufweist, wobei die Steuereinheit dazu vorgesehen ist, in Abhängigkeit von der Aktivitätssensoreinheit eine Qualität des Ausgabesignals anzupassen. Insbesondere ist die Steuereinheit dazu vorgesehen, das Ausgangssignal, die Anzeigeeinheit, die dazu vorgesehen ist, das Ausgangssignal auszugeben, und/oder die Beleuchtungseinheit in Abhängigkeit von der Aktivitätssensoreinheit ein- bzw. auszuschalten. Insbesondere ist die Steuereinheit dazu vorgesehen, in Abhängigkeit von der Aktivitätssensoreinheit zwischen einem stereoskopischen und einem klassischen Ausgangssignal umzuschalten. Insbesondere weist die Aktivitätssensoreinheit zumindest einen Bewegungssensor auf, der dazu vorgesehen ist, eine Bewegung und/oder eine Haltung eines Bedieners zu registrieren. Insbesondere weist die Aktivitätssensoreinheit zumindest einen Sensor auf, der dazu vorgesehen ist, eine Verstellung des Stativs zu registrieren. Insbesondere sind die Kameramodule Teil der Aktivitätssensoreinheit, wobei die Steuereinheit ein sich veränderndes Bild als Aktivität registriert. Insbesondere weist die Aktivitätssensoreinheit einen Sensor auf, der dazu vorgesehen ist, einen Aufsetzstatus einer mit der Anzeigeeinheit gekoppelten Shutterbrille zu detektieren und der vorteilhaft in die Shutterbrille integriert ist, wobei die Shutterbrille vorzugsweise Teil der Dentaltechnikbilderfassungsvorrichtung ist. Es kann insbesondere eine Energieersparnis, insbesondere bei Verwendung akkubetriebener Anzeigegeräte, wie insbesondere einem Smartphone oder einem Tablet-PC, und/oder ein hoher Komfort erreicht werden.

Weiterhin wird ein System vorgeschlagen mit einer Dentaltechnikbilderfassungsvorrichtung, die eine Kameraeinheit mit einem einzelnen Kameramodul und eine Steuereinheit aufweist, die dazu vorgesehen ist, ein Signal der Kameraeinheit zu verarbeiten und ein Ausgabesignal zu liefern, das dazu vorgesehen ist, einer Anzeigeeinheit zugeführt zu werden, und mit einem weiteren Kameramodul, dass in die Kameraeinheit montiert werden kann, um eine erfindungsgemäße Dentaltechnikbilderfassungsvorrichtung zu bilden. Insbesondere weist das System zumindest ein Betriebsprogramm auf, das dazu vorgesehen ist, auf einer Datenverabeitungseinheit, beispielsweise einem PC, insbesondere einem Tablet-PC, und/oder einem Smartphone, zusätzlich zu einem Betriebssystem installiert zu werden, um eine erfindungsgemäße Anzeigeeinheit zu bilden. Es kann insbesondere eine komfortable Ausgestaltung erreicht werden. Insbesondere kann erreicht werden, dass ein Bediener, je nach Vorliebe, entweder eine oder zwei Kameramodule montiert. Insbesondere kann eine modulare Vermarktung erreicht werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung des Ausführungsbeispiels

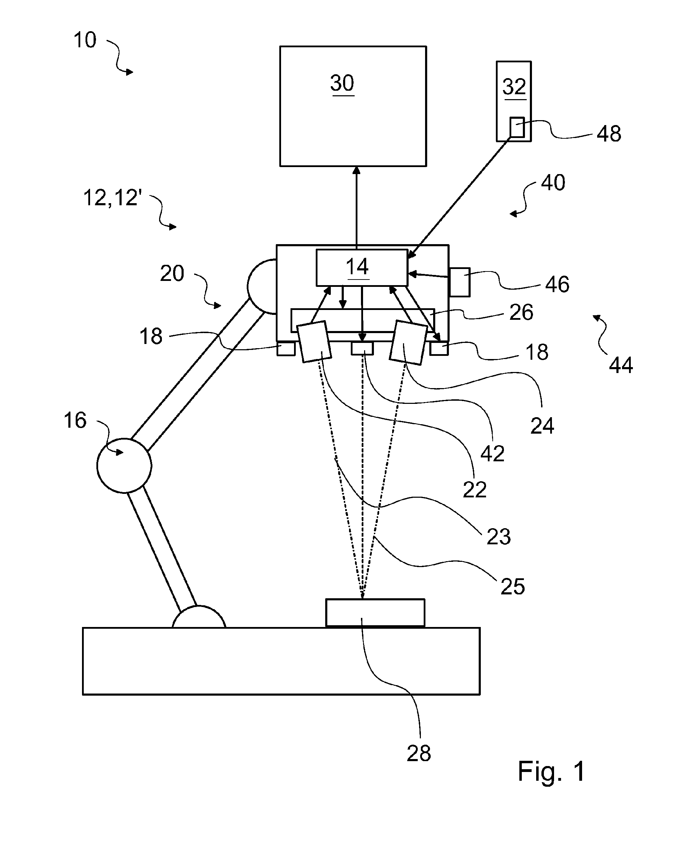

Figur 1 zeigt in schematischer Darstellung ein System 10 mit einer stereoskopischen Anzeigeeinheit 30, einer Dentaltechnikbilderfassungsvorrichtung 12', die eine Kameraeinheit 20 mit einem ersten Kameramodul 22 und eine Steuereinheit 14 aufweist, die dazu vorgesehen ist, ein Signal der Kameraeinheit 20 zu verarbeiten und ein Ausgabesignal zu liefern, das dazu vorgesehen ist, der Anzeigeeinheit 30 zugeführt zu werden, und mit einem weiteren Kameramodul 24, dass in die Kameraeinheit 20 montierbar ist, um eine Dentaltechnikbilderfassungsvorrichtung 12 zu bilden. Die Kameraeinheit 20 mit erstem und weiterem Kameramodul 22, 24 ist zur Aufnahme stereoskopischer Bilder vorgesehen. Die Steuereinheit 14 ist bei montiertem ersten und montiertem weiteren Kameramodul 22, 24 dazu vorgesehen, die Signale der Kameraeinheit 20 zu verarbeiten und ein Ausgabesignal zu liefern, das dazu vorgesehen ist, der Anzeigeeinheit 30 zugeführt zu werden. Die Anzeigeeinheit 30 ist als stereoskopisches Display ausgebildet, das dazu vorgesehen ist, mit einer Shutterbrille 32 des Systems 10 zusammenzuarbeiten, um den stereoskopischen Eindruck zu erzeugen. Alternativ sind Ausgestaltungen eines stereoskopischen Displays mit Polarisationsfiltern, die mit Polarisationsbrillen zusammenarbeiten, oder Ausgestaltungen eines stereoskopischen Displays, die ganz auf eine zusätzliche Brille verzichten können, denkbar.

Die Dentaltechnikbilderfassungsvorrichtung 12 weist ein Stativ 16 auf, das von zwei gekoppelten Schwenkarmen gebildet ist. Ferner weist die Dentaltechnikbilderfassungsvorrichtung 12 eine Beleuchtungseinheit 18 auf, die dazu vorgesehen ist, ein zu beobachtendes Objekt 28 auszuleuchten. Die Beleuchtungseinheit 18 ist aus einem Ring von LED's gebildet, der um die Kameramodule 22, 24 herum angeordnet ist. Weiterhin weist die Kameraeinheit 20 eine Aktoreinheit 26 auf, die dazu vorgesehen ist, eine Lage der Kameramodule 22, 24 zueinander in Abhängigkeit von Signalen der Steuereinheit 14 zu verändern.

Die Dentaltechnikbilderfassungsvorrichtung 12 weist eine Assistenzeinheit 40 auf, die in unterschiedlichen Betriebsmodi über einen bloßen Bildtransfer hinausgehende Assistenzfunktionen auszuführt. Die Steuereinheit 14 ist Teil der Assistenzeinheit 40. Die Assistenzeinheit 40 weist eine Indikationseinheit 42 auf, die dazu vorgesehen ist, zumindest ein Zentrum eines Objektbereichs zu kennzeichnen, der von der Kameraeinheit 20 erfasst wird. Die Indikationseinheit 42 ist von einem Laser gebildet, der mittig zwischen den Kameramodulen 22, 24 angeordnet ist.

Die Steuereinheit 14 ist dazu vorgesehen, eine Lage der Kameramodule 22, 24 zueinander in Abhängigkeit von einem Abstand der Kameraeinheit 20 zu dem zu beobachtenden Objekt 28 anzupassen. Die Steuereinheit 14 ist dazu vorgesehen, eine Lage der Kameramodule 22, 24 zu korrigieren, so dass sich optische Achsen 23, 25 der Kameramodule 22, 24 in einem Auftreffpunkt der Lasers schneiden. Der Auftreffpunkt des Lasers liegt so jeweils in einer Mitte eines von dem jeweiligen Kameramodul 22, 24 aufgenommenen Bildes.

Die Assistenzeinheit 40 ist dazu vorgesehen, einen Vergleich hinsichtlich Form und Farbe eines aufgenommenen Objekts 28 mit einem zuvor abgespeicherten Muster vorzunehmen. Die Assistenzeinheit 40 ist dazu vorgesehen, Signale der Kameraeinheit 20 auszuwerten und Hilfsprojektionen, in Form eines Gitternetzes, in das Ausgabesignal einzubetten, um eine erhöhte Plastizität zu erreichen.

Weiterhin weist die Dentaltechnikbilderfassungsvorrichtung 12 eine Aktivitätssensoreinheit 44 auf, wobei die Steuereinheit 14 dazu vorgesehen ist, in Abhängigkeit von der Aktivitätssensoreinheit 44 eine Qualität des Ausgabesignals anzupassen. Die Aktivitätssensoreinheit 44 weist einen Bewegungsmelder 46 auf, der dazu vorgesehen ist, Bewegungen eines Bedieners zu registrieren. Weiterhin ist die Steuereinheit 14 dazu vorgesehen, eine Vergrößerung in Abhängigkeit von einer Haltung des Bedieners, also insbesondere eines Abstands des Bedieners zu der Displayeinheit und/oder der Dentaltechnikbilderfassungsvorrichtung, einzustellen. Die Steuereinheit 14 ist dazu vorgesehen, bei Registrierung einer Bewegung eines Bedieners, die Beleuchtungseinheit 18 und das Ausgabesignal zu aktivieren, bzw. bei Ausbleiben einer Bewegung des Bedieners die Beleuchtungseinheit 18 zu deaktivieren. Weiterhin weist die Aktivitätssensoreinheit 44 einen in die Shutterbrille 32 integrierten Sensor 48 auf, der dazu vorgesehen ist, festzustellen, ob die Shutterbrille 32 aufgesetzt ist. Die Steuereinheit 14 ist dazu vorgesehen, bei Detektion einer aufgesetzten Shutterbrille 32 das Ausgabesignal als stereoskopisches Ausgabesignal auszugeben und bei abgesetzter Shutterbrille 32 ein klassisches planares Ausgabesignal auszugeben.

Weiterhin sind Ausgestaltungen einer Shutterbrille mit klappbaren Shuttern denkbar, wobei ein stereoskopisches Ausgabesignal bei heruntergeklappten Shuttern aktiviert wird.

Weiterhin ist es denkbar, dass eine erfindungsgemäße Dentaltechnikbilderfassungsvorrichtung als Brillenvorrichtung, insbesondere als Cyberbrille, ausgebildet ist, wobei eine Anzeigeeinheit von zwei Displays gebildet ist, die unterschiedlichen Augen zugeordnet sind. Dabei sind die Displays gemeinsam mit Kameramodulen an einem Brillengestell montiert. Bilder der Kameramodule können dabei vergrößert und bearbeitet über die Displays ausgegeben werden.

### Bezugszeichen

- 10: System
- 12: Dentaltechnikbilderfassungsvorrichtung
- 14: Steuereinheit
- 16: Stativ
- 18: Beleuchtungseinheit
- 20: Kameraeinheit
- 22: Kameramodul
- 23: optische Achse
- 24: Kameramodul
- 25: optische Achse
- 26: Aktoreinheit
- 28: Objekt
- 30: Anzeigeeinheit
- 32: Shutterbrille
- 40: Assistenzeinheit
- 42: Indikationseinheit
- 44: Aktivitätssensoreinheit
- 46: Bewegungsmelder
- 48: Sensor

## Patentansprüche

1. Dentaltechnikbilderfassungsvorrichtung mit einer Kameraeinheit (20) zur Aufnahme stereoskopischer Bilder, die zumindest zwei Kameramodule (22, 24) aufweist, und mit zumindest einer Steuereinheit (14), die Signale der Kameraeinheit (20) verarbeitet und zumindest ein Ausgabesignal liefert, das dazu vorgesehen ist, einer Anzeigeeinheit (30) zugeführt zu werden.

2. Dentaltechnikbilderfassungsvorrichtung nach Anspruch 1, **dadurch gekennzeichnet, dass** die Steuereinheit (14) dazu vorgesehen ist, eine Lage der Kameramodule (22, 24) zueinander in Abhängigkeit von einem Abstand der Kameraeinheit (20) zu einem zu beobachtenden Objekt (28) anzupassen.

3. Dentaltechnikbilderfassungsvorrichtung nach einem der vorhergehenden Ansprüche, **gekennzeichnet durch** zumindest eine Assistenzeinheit (40), die dazu vorgesehen ist, in zumindest einem Betriebsmodus eine über einen bloßen Bildtransfer hinausgehende Assistenzfunktion auszuführen.

4. Dentaltechnikbilderfassungsvorrichtung nach Anspruch 3, **dadurch gekennzeichnet, dass** die Assistenzeinheit (40) in zumindest einem Betriebsmodus dazu vorgesehen ist, einen Vergleich eines aufgenommenen Objekts (28) mit zumindest einem Muster vorzunehmen.

5. Dentaltechnikbilderfassungsvorrichtung nach Anspruch 3, **dadurch gekennzeichnet, dass** die Assistenzeinheit (40) zumindest eine Indikationseinheit (42) aufweist, die dazu vorgesehen ist, zumindest einen Objektbereich zu kennzeichnen, der von der Kameraeinheit (20) erfasst wird.

6. Dentaltechnikbilderfassungsvorrichtung nach Anspruch 3, **dadurch gekennzeichnet, dass** die Assistenzeinheit (40) in zumindest einem Betriebsmodus dazu vorgesehen ist, Signale der Kameraeinheit (20) auszuwerten und Hilfsprojektionen in das Ausgabesignal einzubetten.

7. Dentaltechnikbilderfassungsvorrichtung nach einem der vorhergehenden Ansprüche, **gekennzeichnet durch** zumindest eine Aktivitätssensoreinheit (44), wobei die Steuereinheit (14) dazu vorgesehen ist, in Abhängigkeit von der Aktivitätssensoreinheit (44) eine Qualität des Ausgabesignals anzupassen.

8. Verfahren zum Betrieb einer Dentaltechnikbilderfassungsvorrichtung (12) nach einem der vorhergehenden Ansprüche.

9. System mit einer Dentaltechnikbilderfassungsvorrichtung (12) nach einem der Ansprüche 1 bis 7 und einer Anzeigeeinheit (30), die dazu vorgesehen ist, ein Ausgabesignal der Steuereinheit (14) auszugeben.

10. System mit einer Dentaltechnikbilderfassungsvorrichtung (12'), die eine Kameraeinheit (20) mit einem einzelnen Kameramodul (22) und eine Steuereinheit (14) aufweist, die dazu vorgesehen ist, ein Signal der Kameraeinheit (20) zu verarbeiten und ein Ausgabesignal zu liefern, das dazu vorgesehen ist, einer Anzeigeeinheit (30) zugeführt zu werden, und mit einem weiteren Kameramodul (24), das in die Kameraeinheit (20) montiert werden kann, um eine Dentaltechnikbilderfassungsvorrichtung (12) nach einem der Ansprüche 1 bis 7 zu bilden.
